# EUROPEAN PATENT SPECIFICATION

(11) **EP 0 986 150 B1**
(45) Date of publication and mention of the grant of the patent: **26.03.2003**
(21) Application number: 99204239.0
(22) Date of filing: 06.08.1997
(51) Int. Cl.: H01S 3/07, H01S 3/081, H01S 3/093

(54) **Multiple element, folded beam laser**
Laser mit mehreren Elementen und gefaltetem Strahlengang
Laser à faisceau replie et à éléments multiples

(30) Priority: 07.08.1996 US 689356; 07.08.1996 US 695195
(43) Date of publication of application: 15.03.2000
(62) Divisional of application: 97938154.8
(73) Proprietor: Lumonics Inc., Kanata Ontario K2K 1Y3 (CA)
(72) Inventor: Filgas, David Michael, Newbury Park California 91320 (US)
(74) Representative: Kensett, John Hinton

(56) References cited:
- EP-A- 0 226 790
- WO-A-89/10641
- WO-A-91/06994
- DE-A- 1 614 560
- DE-A- 4 004 071
- FR-A- 2 109 003
- US-A- 3 467 916
- US-A- 3 794 929
- US-A- 4 697 271
- US-A- 5 237 584
- US-A- 5 301 009
- PATENT ABSTRACTS OF JAPAN vol. 14, no. 308 (E-947) [4251], 3 July 1990 (1990-07-03) & JP 02 098990 A (MIYACHI ELECTRIC), 11 April 1990 (1990-04-11)

## Description

### BACKGROUND OF THE INVENTION

### Field of the Invention:

This invention relates generally to the field of lasers, and more particularly to lasers having multiple elements of lasing medium and a folded beam path.

### Description of the Background Art:

Known solid state lasers include a crystal of active laser medium, for example a cylindrical rod of ruby or neodimium-doped yttrium aluminum garnet (YAG), and one or more pumping lamps, enclosed in a highly reflective housing. A highly reflecting mirror and a partially reflecting mirror are positioned to face one another at opposite ends of the laser medium such that light emitted from the laser medium is reflected back and fourth between the highly and partially reflecting mirrors.

The pumping lamps produce light which excites the atoms of the laser medium to a metastable state. The relaxation of the excited atoms to their ground state is accompanied by the emission of light Some of the emitted light is reflected back and fourth between the end mirrors, and the growing reflected wave induces the emission of additional light into the reflected wave state. The partially reflecting mirror, also referred to as an output coupler, allows a portion of the reflected light to pass as the output beam of the laser.

The power output of solid state lasers depends upon, among other things, the length of the path of the beam within the laser medium. Thus, the power output of such a laser can be increased by increasing the length of the laser medium. This approach has at least two practical limitations, however. First, rods of increased length are difficult and expensive to manufacture. Second, beam quality deteriorates rapidly when rods exceed six to eight inches in length.

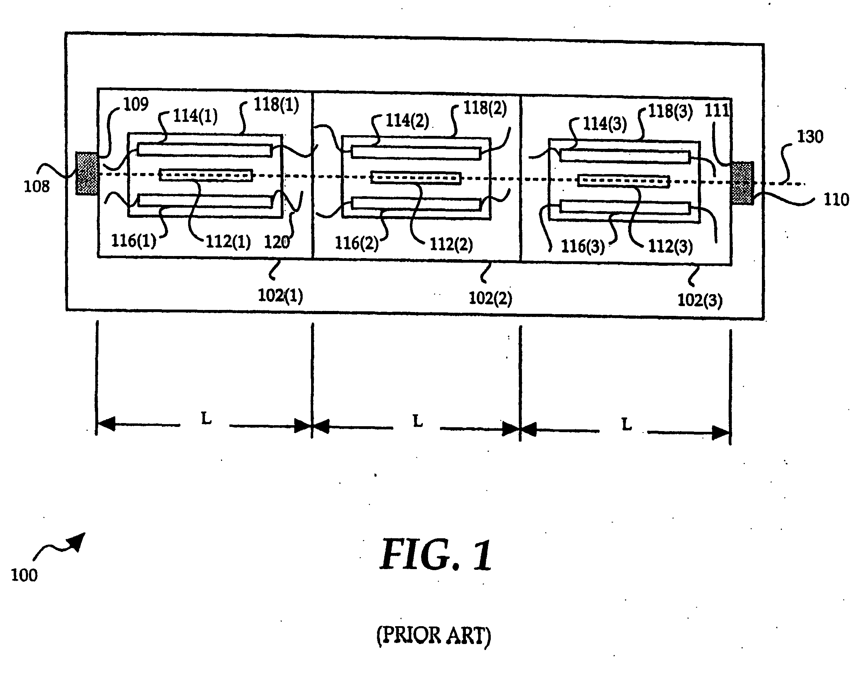

Due to the limitations of a single long rod, typical high powered lasers employ multiple short rods. Fig. 1 shows a cross-sectional view of a prior art multirod laser 100. Prior art laser 100 includes pump chambers 102(1-3), high reflector 108 which has a highly reflecting face 109, and output coupler 110 which has a partially reflecting face 111.

Pump chambers 102(1-3) include cylindrical laser rods 112(1-3) and two cylindrical arc lamps 114(1-3) and 116(1-3), mounted axially parallel in highly reflecting housings 118(1-3). Pump chambers 102(1-3) are aligned such that the axes of laser rods 112(1-3) are collinear and define an optical path 130 which is perpendicular to faces 109 and 111 of high reflector 108 and output coupler 110, respectively.

Combing multiple pump chambers in series as shown in laser 100 significantly increases output power, but the number of pump chambers that can be used in a system is practically limited by increased length making the system more awkward to work with and requiring more complex alignment processes to optimise the laser output.

Prior art patents have suggested folding the optical path of a laser to decrease the laser length overall and increase the optical path length within the active laser medium. For example, U.S. Pat. No. 5,148,443, issued to Du et al., teaches folding the beam within a single cavity of active laser medium by providing retroreflecting mirrors at each end of the cavity. This approach appears well-suited to gas lasers, but if the laser medium is solid state, then the size of the cavity is limited to the size of the available medium crystal. Thus, as applied to solid state lasers, Du et al. suffers the same limitations as the single crystal lasers described above.

Similarly, U.S. Pat. No. 3,361,987, issued to DeMaria, teaches folding the beam within a single poly-sided crystal. This single crystal method suffers the same limitations as do the single crystal lasers described above.

Each of FR-A-2 109 003, US-A-3,974,929 and US-A-4,697,271 discloses a laser pumping chamber, and a method for simultaneous pumping of plural laser elements in accordance with the preambles of Claims 1 and 19 respectively.

### SUMMARY OF THE INVENTION

The present invention teaches a multi-element, folded beam laser including a plurality of laser medium elements, a pumping means, a highly reflective reflector, an output coupler, and a beam director. Pumping light incident from the pumping means, for example arc lamps, stimulates the laser medium elements, preferably sold state laser rods, to emit a laser beam which is directed by the beam director along a folded optical path. The reflector reflects nearly 100% of incident laser light back along the optical path. The output coupler passes a portion of the incident laser light as a laser output beam and reflects the remainder of the incident laser light back along the optical path, thus establishing an optical resonator in the cavity defined between the reflector and the output coupler.

One laser of the present invention includes exactly two beam directors and one *row* of laser medium elements, each element having a respective axis, disposed such that the axes are parallel, coplanar, and equally spaced. The two beam directors are each right isoceles prisms, having a base surface and two orthogonal surfaces which internally reflect beams to redirect incident light beams 180 degrees. The beam directors are spaced from opposite ends of the laser medium elements with the base surfaces perpendicular to the axes of the laser medium elements, such that pairs of laser medium elements are disposed symetrically about the bisector of the right angle vertex of each prism. A beam emitted along the axis of a first element is redirected by the beam directors 180 degrees along the axis of a second element disposed symetrically relative to the first element about the bisector of the right angle vertex of the beam director.

An alternate embodiment of the laser of the present invention includes two rows of coplanar laser medium elements and exactly three beam directors. Each of the beam directors are right isosceles prisms which redirect incident light beams 180 degrees. Two of the beam directors are intraplanar beam directors, which fold the beam between laser medium elements within a common plane. The third beam director is an interplanar beam director which folds the beam between elements of different planes.

Another alternate embodiment of the laser of the present invention includes multiple rows of coplanar laser medium elements and exactly four beam directors. Each of the beam directors is a right isosceles prism which redirects incident light beams 180 degrees. Two of the beam directors are intraplanar beam directors, which fold the beam between laser medium elements within a common plane. The other two beam directors are interplanar beam directors which fold the beam between elements of different planes.

An alternate ring laser of the present invention includes a plurality of laser medium elements, a pumping means, an output coupler, and at least one beam director. Pumping light incident from the pumping means, for example arc lamps, stimulates the laser medium elements, preferably solid state laser rods, to emit a laser beam which is directed by the beam director along a looped optical path. The beam directors are right isosceles prisms, having a base surface and two orthogonal surfaces which internally reflect beams to redirect incident light beams 180 degrees. The output coupler is an optical beam director comprising a right isosceles prism having a base surface and two orthogonal internally reflecting surfaces, one of which is coated to frustrate total internal reflection, thus passing a portion of the incident laser light as a laser output beam and redirecting the remainder of the incident light 180 degrees along the looped optical path. The beam directors and the output beam director fold the beam to pass axially through each of the elements along the looped optical path, thus establishing a ring laser.

Finally, an alternate laser amplifier of the present invention includes a plurality of laser medium elements, each having a respective axis, a pumping means, and at least one beam director. A laser beam emitted by a source laser is directed by the beam director(s) axially through the laser medium elements. The pumping means excites the laser medium elements to emit light, thus amplifying the source laser beam.

The present invention is defined in independent Claims 1, 15 and 19. Embodiments of the invention are set out in the dependent claims

In each disclosed embodiment, the pumping means (i.e., plurality of arc lamps) is disposed such that each pumping element (i.e., individual arc lamp) simultaneously pumps a plurality of laser medium elements. Particularly, the arc lamps are disposed perpendicular to the axes of the laser medium elements, such that at least one arc lamp flashes on all of the laser medium elements, thus reducing problems caused by non-uniform flashing of the arc lamps.

### BRIEF DESCRIPTION OF THE DRAWINGS

Figure 1 is a cross-sectional view of a prior art multi-rod laser;
Figure 2 is a partially exploded perspective view of a laser constructed in accordance with the present invention;
Figure 3 is a perspective view of a pump chamber block in accordance with the present invention;
Figure 4 is a cross-sectional view taken along line 4-4 of the laser of Figure 2;
Figure 5 is a cross-sectional view taken along line 5-5 of the laser of Figure 2;
Figure 6 is a cross-sectional view of an alternate embodiment of a laser having an odd number of laser elements constructed in accordance with the present invention;
Figure 7A is a perspective view of an alternate embodiment of a laser having two rows of elements and three beam directors;
Figure 7B shows a horizontal cross-section taken along the plane of the axes of the lower row of elements of the laser of Figure 7A;
Figure 7C shows a horizontal cross-section taken along the plane of the axes of the upper row of elements of the laser of Figure 7A;
Figure 8 shows a horizontal cross-sectional of a ring laser constructed in accordance with the present invention; and
Figure 9 shows a horizontal cross-section of a laser amplifier constructed in accordance with the present invention.

### DETAILED DESCRIPTION OF A PREFERRED EMBODIMENT

The present invention provides a novel, high power, multi-element, folded beam laser. Numerous specific details, such as the type and number of laser medium elements and the use of arc lamps for pumping are set forth to illustrate the invention, but the invention may be practiced apart from these specific details. In other instances, details of well-known equipment and processes, for example the provision of a cooling system, are omitted for the sake of clarity.

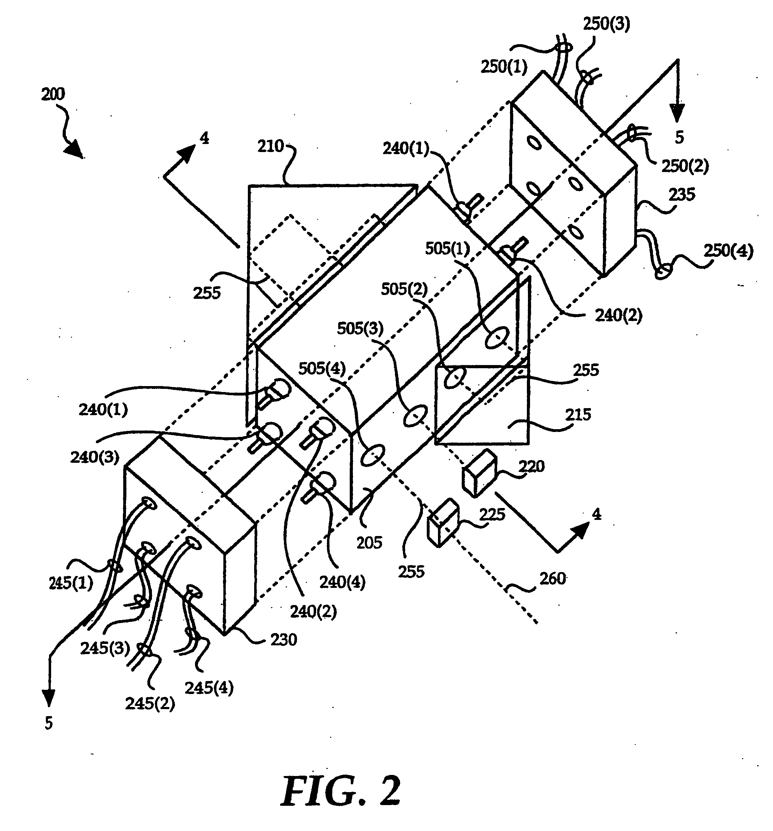

FIG. 2 shows a laser 200 including a pump chamber housing 205, a first beam director 210, a second beam director 215, a highly reflecting reflector 220, an output coupler 225 and insulator blocks 230 and 235. Pump chamber housing 205 supports four laser medium elements 505(1-4), of which only one end of each is visible in FIG. 2. Each element 505(1-4) has a central axis coincident with an optical path 255, which passes from reflector 220 to output coupler 225, between which the path 255 is folded by beam directors 210 and 215. Housing 205 also supports arc lamps 240(1-4) which are supplied with electrical power via electrical leads 245(1-4) and 250(1-4) passing through insulator blocks 230 and 235 respectively. As an alternative to optical pumping by arc lamps, other pumping means, such as gas discharges, chemical reactions, direct electrical current and plasma pumping may be employed.

Pumping light incident from arc lamps 240(1-4) stimulates the four laser medium elements 505(1-4) to emit a laser beam which is directed by beam directors 210 and 215 along optical path 255. Reflector 220 reflects nearly 100% of incident laser light back along optical path 255. Output coupler 225 passes a portion of the incident laser light as laser output beam 260 and reflects the remainder of the incident laser light back along optical path 255, thus establishing an optical resonator in the cavity defined between reflector 220 and output coupler 225.

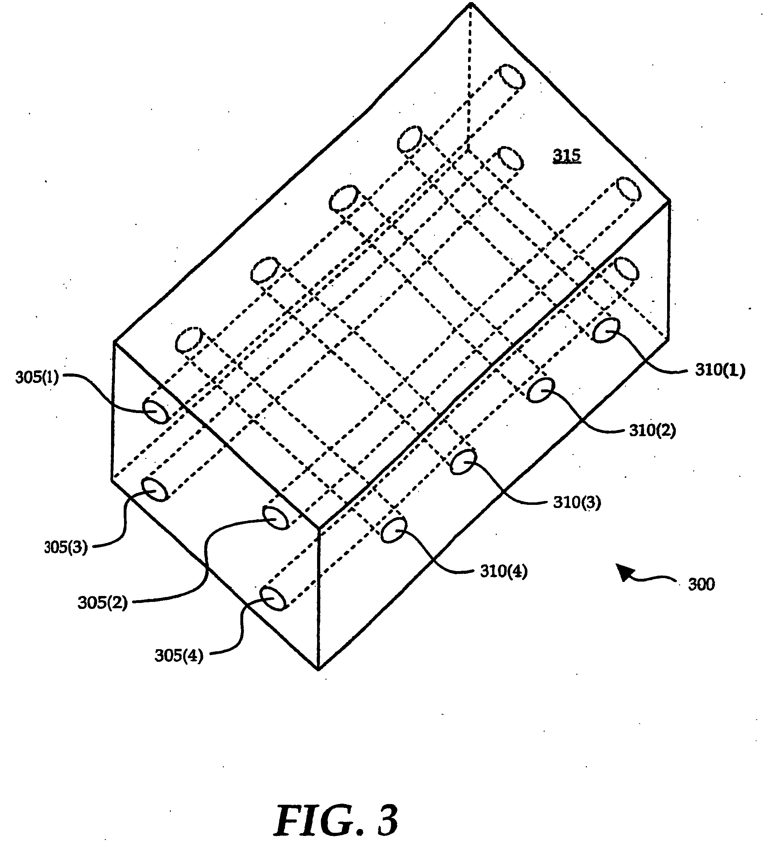

FIG. 3 shows a perspective view of a pump chamber block 300, which is an optically transparent solid, including lamp bores 305(1-4) and element bores 310(1-4). Block 300 is optional, and may be used to facilitate assembly of a laser 200. Lamp bores 305(1, 2) are disposed perpendicular to and above element bores 310(1-4). Lamp bores 305(3, 4) are disposed perpendicular to and below element bores 310(1-4). Since lamp bores 305(1-4) are oriented non-parallel to element bores 310(1-4), each arc lamp 240(1-4) flashes on each laser medium element 505(1-4), which reduces problems caused by non-uniform flashing of the arc lamps. Preferably, the exterior surface 315 of pump chamber block 300 is covered with a reflective coating to reflect light emitted from lamps 240(1-4) toward the interior of pump chamber block 300, thus increasing the amount of pump light incident on laser medium elements 505(1-4).

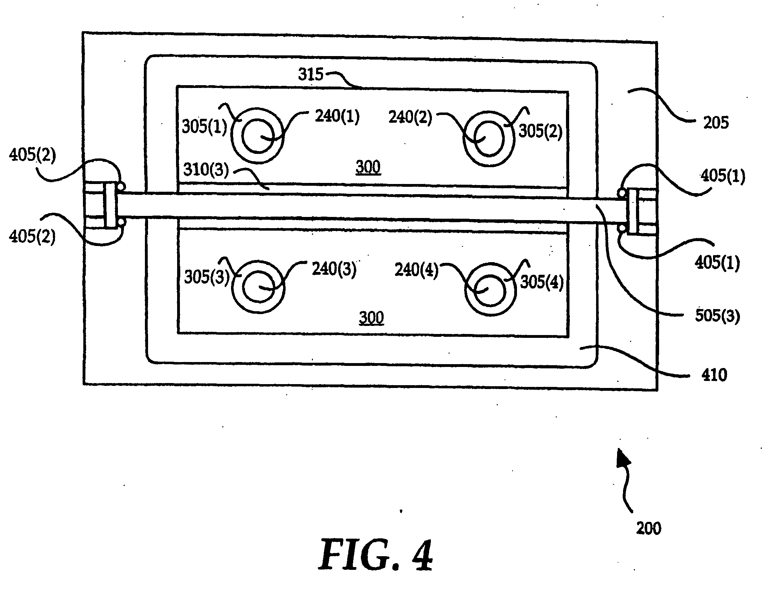

FIG. 4 shows a cross-sectional view of laser 200, including optional pump chamber block 300, pump chamber housing 205, laser medium element 505(3), arc lamps 240(1-4), and "O"-rings 405(1, 2). Pump chamber housing 205 defines an internal coolant cavity 410, and contains and provides support for laser medium elements 505(1-4), arc lamps 240(1-4), and pump chamber block 300. "O"-rings 405(1, 2) provide a seal between laser medium element 505(3) and pump chamber housing 205, and prevent the leakage of coolant from coolant cavity 410. Additional "O"-rings (not shown) provide seals between the additional laser medium elements 505(1, 2, 4) and pump chamber housing 205. Lamp bores 305(1-4) and element bores 310(1-4) (of which only one is shown) all communicate with coolant cavity 410. The diameters of lamp bores 305(1-4) and of element bores 310(1-4) are slightly larger than the diameters of lamps 240(1-4) and elements 505(1-4), respectively, such that coolant can flow through the spaces defined therebetween.

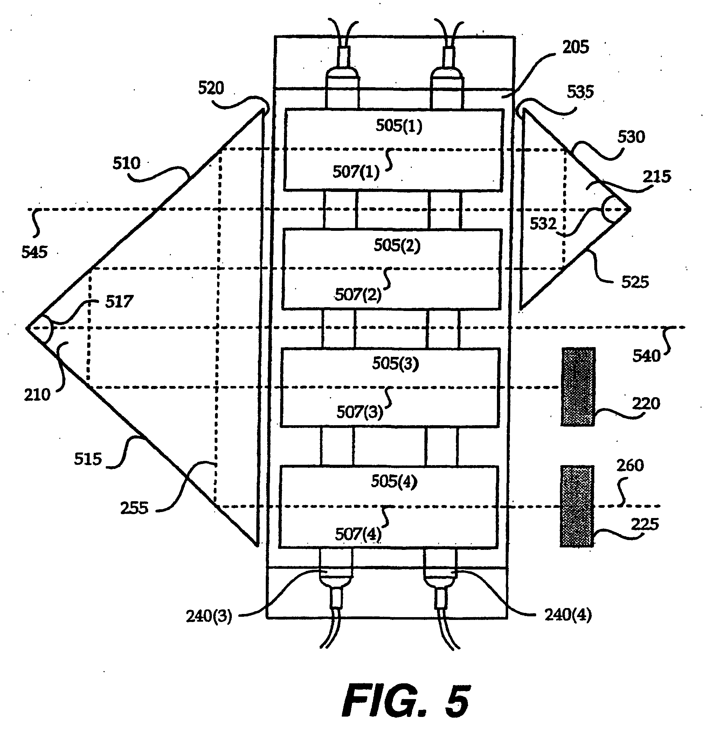

FIG. 5 is a view looking in the direction of Fig. 2 arrows 5-5 towards a cross-section of laser 200, in which the lower half of pump chamber housing 205 is seen containing arc lamps 240(3,4), and the four laser medium elements 505(1-4). Laser medium elements 505(1-4) are right circular cylindrical rods disposed with their respective central axes 507(1-4) parallel, coplanar and equally spaced. Laser medium elements 505(1-4) are preferably solid state crystals such as ruby rods, but non-solid state laser medium elements such as a liquid or gas medium in glass containers are within the scope of the invention.

First beam director 210 is preferably a right isosceles prism, having two orthogonal internally reflecting surfaces 510 and 515, the vertex of which forms a right angle 517, and a base surface 520. Second beam director 215 is preferably also a right isosceles prism, having two orthogonal internally reflecting surfaces 525 and 530, the vertex of which forms a right angle 532, and a base surface 535. The pair of reflecting surfaces 510 and 515 in beam director 210 and the pair of reflecting surfaces 525 and 530 in beam director 215 having orthogonal dispositions each redirects incident light beams 180 degrees. Alternative means such as a roof mirror or optical fibers may be employed for redirecting a beam, but prisms are preferred because an incident beam incurs less loss upon penetrating the base surface and being internally reflected in a prism than upon being reflected by two mirror surfaces.

First beam director 210 is disposed with base surface 520 adjacent pump chamber housing 205 and substantially perpendicular to axes 507(1-4). Second beam director 215 is disposed with base surface 535 substantially perpendicular to axes 507(1-4) and adjacent pump chamber housing 205 opposite first beam director 210. First beam director 210 and second beam director 215 are positioned relative to each other such that laser medium element axes 507(1&2) are spaced symetrically about a bisector 545 of the right angle 532 apex of the second beam director, and such that pairs of laser medium element axes 507(1&4) and axes 507(2&3) are spaced symetrically about a bisector 540 of the right angle 517 apex of the first beam director.

For simplicity optical path 255 is discussed as having a beginning and an end, but in fact optical path 255 is a bi-directional path, along which light emitted from elements 505(1-4) travels in both directions as it resonates between reflector 220 and output coupler 225. A light beam reflected by reflector 220 passes along axis 507(3) through element 505(3) and enters by base surface 520 into first beam director 210. The beam is next reflected by internal reflecting surface 515 and then by internal reflecting surface 510 such that optical path 255 is redirected 180 degrees as the beam exits base surface 520 of first beam director 210 and, because elements 505(2&3) are disposed symetrically about bisector 540, the beam is aligned with axis 507(2) of element 505(2).

The beam then passes along axis 507(2) through element 505(2) and enters by base surface 535 into second beam director 215. The optical path 255 is redirected 180 degrees by internal reflecting surface 525 and then by internal reflecting surface 530 such that as the beam exits base surface 535 of second beam director 215, and because elements 505(1&2) are disposed symetrically about bisector 545, the beam is aligned with axis 507(1) of element 505(1).

Next, after passing along axis 507(1) of element 505(1) the beam enters again through base surface 520 into first beam director 210. The beam is redirected by internal reflecting surface 510 and then by internal reflecting surface 515 along optical path 255 to exit first beam director base surface 520, and because elements 505(1&4) are disposed symetrically about bisector 540, the beam is aligned with axis 507(4) of element 505(4).

Finally, the beam travels along axis 507(4) through element 505(4) and follows optical path 255 to output coupler 225, which passes a first portion of the beam as laser output beam 260 and reflects a second portion of the beam back along optical path 255.

While the above description discloses the invention in an embodiment as a four-element, folded beam laser, those skilled in the art should understand that the principle of the invention may be extended to a laser system having a larger, even number of elements.

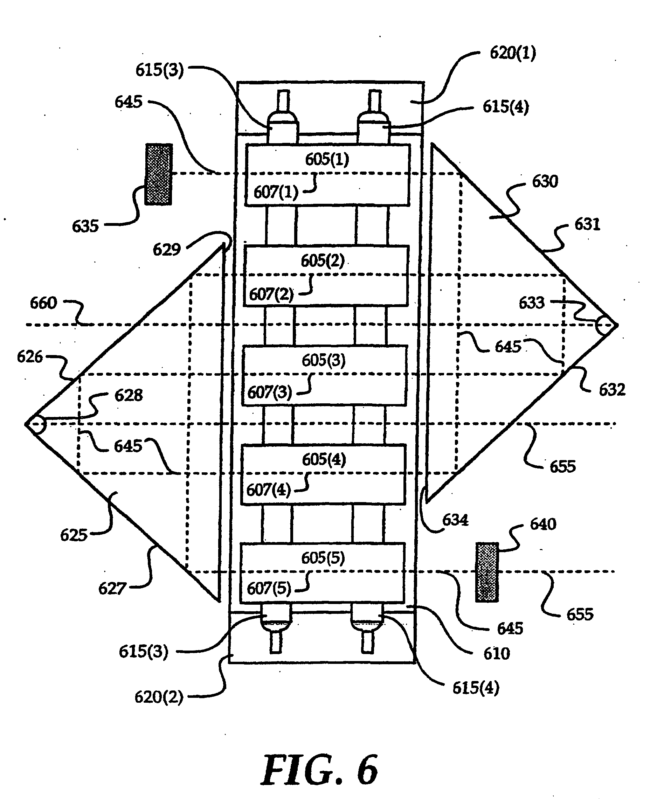

FIG. 6 shows a cross-section of an alternate embodiment, laser 600, of the present invention oriented like FIG. 5 but having an odd number, specifically five, of laser medium elements 605(1-5). Laser 600 further includes a pump chamber housing 610, arc lamps 615(3, 4) and (1, 2, not visible in FIG. 6), insulator blocks 620(1, 2), a first beam director 625, a second beam director 630, a highly reflecting reflector 635, and an output coupler 640. Laser medium elements 605(1-5) are right circular cylindrical rods, each having a respective central axis 607(1-5), and are disposed with their respective central axes 607(1-5) parallel, coplanar and equally spaced.

Pumping light incident from arc lamps 615(1-4) stimulates the five laser medium elements 605(1-5) to emit a laser beam which is directed by beam directors 625 and 630 along optical path 645. Reflector 635 reflects nearly 100% of incident laser light back along optical path 645. Output coupler 640 passes a portion of the incident laser light as laser output beam 650 and reflects the remainder of the incident laser light back along optical path 645, thus establishing an optical resonator in the cavity defined between reflector 635 and output coupler 640.

First beam director 625 is preferably a right isosceles prism, having two orthogonal internally reflecting surfaces 626 and 627, the vertex of which forms a right angle 628, and a base surface 629. Second beam director 630 is preferably also a right isosceles prism, having two orthogonal internally reflecting surfaces 631 and 632, the vertex of which forms a right angle 633, and a base surface 634. The pair of reflecting surfaces 626 and 627 in beam director 625 and the pair of reflecting surfaces 631 and 632 in beam director 630, having orthogonal dispositions, each redirects incident light beams 180 degrees.

First beam director 625 is disposed with base surface 629 adjacent pump chamber housing 610 and substantially perpendicular to axes 607(1-5). Second beam director 630 is disposed with base surface 634 substantially perpendicular to axes 607(1-5) and adjacent pump chamber housing 610 opposite first beam director 625. First beam director 625 and second beam director 630 are positioned relative to each other such that pairs of laser medium element axes 605(3&4) and 605(2&5) are spaced symetrically about a bisector 655 of the right angle 628 apex of first beam director 625, and such that pairs of laser medium element axes 607(2&3) and axes 607(1&4) are spaced symetrically about a bisector 660 of the right angle 633 apex of second beam director 630.

A light beam reflected by reflector 635 passes along axis 607(1) through element 605(1) and enters by base surface 634 into second beam director 630. The beam is next reflected by internal reflecting surface 631 and then by internal reflecting surface 632 such that optical path 645 is redirected 180 degrees as the beam exits base surface 634 of second beam director 630 aligned with axis 607(4) of element 605(4).

The beam passes along axis 607(4) through element 605(4) and enters by base surface 629 into first beam director 625. The optical path 645 is redirected 180 degrees by internal reflecting surface 627 and then by internal reflecting surface 626 such that the beam exits base surface 629 of first beam director 625, aligned with axis 607(3) of element 605(3).

Next, after passing along axis 607(3) of element 605(3) the beam enters again through base surface 634 into second beam director 630. The beam is redirected by internal reflecting surface 632 and then by internal reflecting surface 631 along optical path 645 to exit second beam director base surface 634 aligned with axis 607(2) of element 605(2).

Next, after passing along axis 607(2) of element 605(2) the beam enters again through base surface 629 into first beam director 625. The beam is redirected by internal reflecting surface 626 and then by internal reflecting surface 627 along optical path 645 to exit second beam director base surface 629, and because elements 605(2&5) are disposed symmetrically about bisector 655, the beam is aligned with axis 607(5) of element 605(5).

Finally, the beam travels along axis 607(5) through element 605(5) and follows optical path 645 to output coupler 640, which passes a first portion of the beam as laser output beam 650 and reflects a second portion of the beam back along optical path 645.

While the above description discloses the invention in an embodiment as a five-element, folded beam laser, those skilled in the art should understand that the principle of the invention may be extended to a laser system having a larger, odd number of elements.

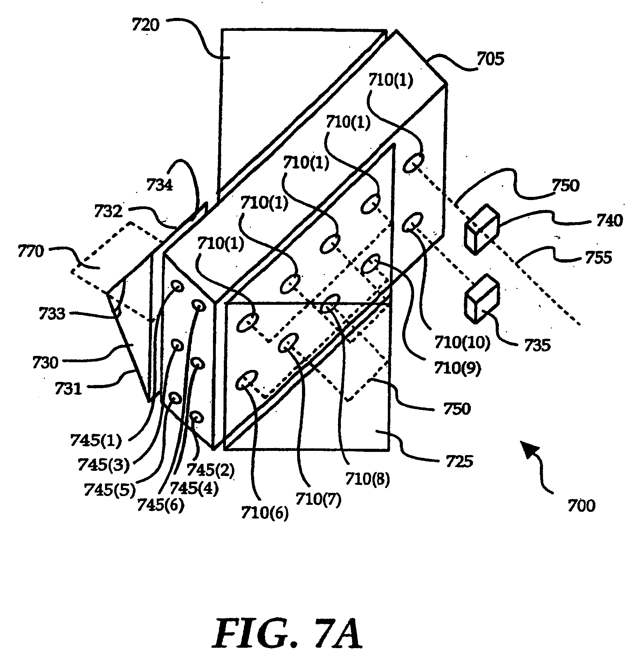

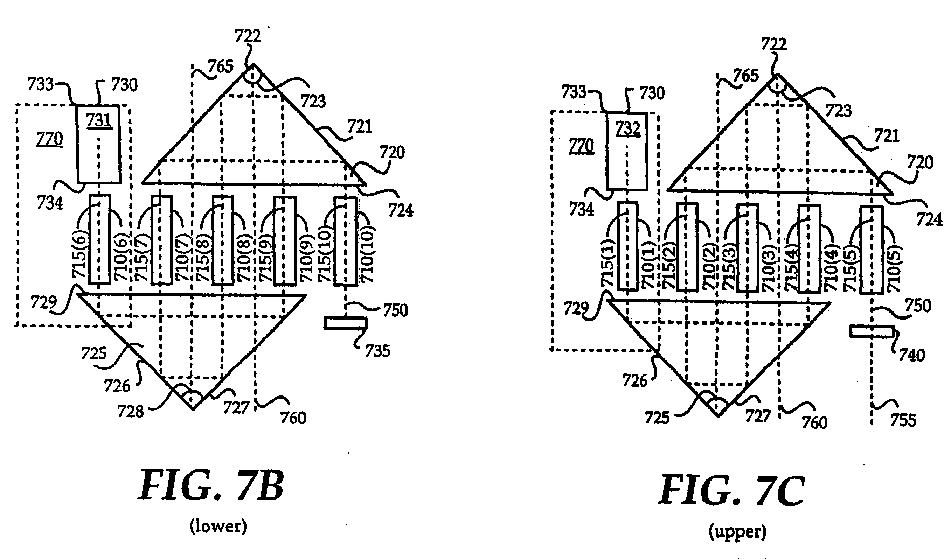

FIG. 7A shows an alternate embodiment, laser 700, of the present invention including a pump chamber housing 705, an upper row of laser medium elements 710(1-5), a lower row of laser medium elements 710(6-10), a first intraplanar beam director 720, a second intraplanar beam director 725, an interplanar beam director 730, a highly reflective reflector 735, an output coupler 740, and a plurality of arc lamps 745(1-6). An optical path 750 passes from reflector 735 to output coupler 740, between which the path 750 is folded by beam directors 720, 725 and 730. Pump chamber housing 705 supports laser medium elements 710(1-10), of which only one end of each is visible in FIG. 7A. Each element 710(1-10) has a respective central axis 715(1-10) (FIGS. 7A & 7B) coincident with optical path 750. Housing 705 also supports arc lamps 745(1-6) which are supplied with electrical power via electrical leads (not shown) passing through insulator blocks (not shown).

Pumping light incident from arc lamps 745(1-6) stimulates laser media elements 710(1-10) to emit a laser beam which is directed by beam directors 720, 725 and 730 along optical path 750. Reflector 735 reflects nearly 100% of incident laser light back along optical path 750. Output coupler 740 passes a portion of the incident laser light as laser output beam 755 and reflects the remainder of the incident laser light back along optical path 750, thus establishing an optical resonator in the cavity defined between reflector 735 and output coupler 740.

FIG. 7B shows a cross-section of laser 700 (housing 705 and lamps 745(5, 6) omitted) along a horizontal plane passing through the lower row of laser medium elements 710(6-10). FIG. 7C shows a cross-section of laser 700 (housing 705 and lamps 745(3-6) omitted) along a horizontal plane passing through the upper row of laser medium elements 710(1-5). Laser medium elements 710(1-5) are right circular cylindrical rods disposed with their respective central axes 715(1-5) parallel, coplanar and equally spaced. Laser medium elements 710(6-10) are also right circular cylindrical rods disposed with their respective central axes 715(6-10) parallel, coplanar and spaced equally. Additionally, axes 715(1-5) of elements 710(1-5) are parallel to axes 715(6-10) of elements 710(6-10). Laser medium elements 710(1-10) are preferably solid state crystals such as ruby rods.

First intraplanar beam director 720 is preferably a right isosceles prism, having two orthogonal internally reflecting surfaces 721 and 722, the vertex of which forms a right angle 723, and a base surface 724. Second intraplanar beam director 725 is preferably also a right isosceles prism, having two orthogonal internally reflecting surfaces 726 and 727, the vertex of which forms a right angle 728, and a base surface 729. Interplanar beam director 730 is preferably also a right isosceles prism, having two orthogonal internally reflecting surfaces 731 and 732, the vertex of which forms a right angle 733, and a base surface 734. The pair of reflecting surfaces 721 and 722 in beam director 720, the pair of reflecting surfaces 726 and 727 in beam director 725, and the pair of reflecting surfaces 731 and 732 in beam director 730, having orthogonal dispositions, each redirects incident light beams 180 degrees.

First intraplanar beam director 720 is disposed with base surface 724 a spaced distance from one end of elements 710(2-5, 7-10) and substantially perpendicular to axes 715(2-5, 7-10). Second intraplanar beam director 725 is disposed with base surface 729 substantially perpendicular to axes 715(1-4, 6-9) and a spaced distance from ends of elements 710(1-4, 6-9) opposite first intraplanar beam director 720. Further, first intraplanar beam director 720 and second intraplanar beam director 725 are positioned relative to each other such that pairs of laser medium element axes 715(2&5, 3&4, 7&10, 8&9) are spaced symetrically about a plane bisector 760 of the right angle 723 apex of first intraplanar beam director 720, and such that pairs of laser medium element axes 715(1&4, 2&3, 6&9, 7&8) are spaced symetrically about a plane bisector 765 of the right angle 728 apex of second intraplanar beam director 725.

Interplanar beam director 730 is disposed with base surface 734 substantially perpendicular to axes 715(1&6) and a spaced distance from ends of elements 710(1&6) opposite second intraplanar beam director 725. Further, interplanar beam director 730 is disposed such that laser medium element axes 715(1&6) are spaced symetrically about a plane bisector 770 of the right angle 733 vertex of interplanar beam director 730.

For simplicity optical path 750 is discussed, with reference to FIGS. 7 B&C, as having a beginning and an end, but in fact optical path 750 is a bi-directional path, along which light emitted from elements 710(1-10) travels in both directions as it resonates between reflector 735 and output coupler 740. A light beam reflected by reflector 735 passes along axis 715(10) through element 710(10) and enters by base surface 724 into first intraplanar beam director 720. The beam is reflected by internal reflecting surface 721 and then by internal reflecting surface 722 such that optical path 750 is redirected 180 degrees as the beam exits base surface 724 of first intraplanar beam director 720 aligned with axis 715(7) of element 710(7).

The beam then passes along axis 715(7) through element 710(7) and enters by base surface 729 into second intraplanar beam director 725. Optical path 750 is redirected 180 degrees by internal reflecting surface 726 and then by internal reflecting surface 727 such that as the beam exits base surface 729 of second intraplanar beam director 725 aligned with axis 715(8) of element 710(8).

Next, after passing along axis 715(8) of element 710(8) the beam enters again through base surface 724 into first intraplanar beam director 720. The beam is redirected by internal reflecting surface 722 and then by internal reflecting surface 721 along optical path 750 to exit first intraplanar beam director base surface 724 aligned with axis 715(9) of element 710(9).

Next, after passing along axis 715(9) of element 710(9) the beam enters again through base surface 729 into second intraplanar beam director 725. The beam is redirected by internal reflecting surface 727 and then by internal reflecting surface 726 along optical path 750 to exit second intraplanar beam director base surface 729 aligned with axis 715(6) of element 710(6).

Next, the beam enters through base surface 734 into interplanar beam director 730. The beam is redirected by internal reflecting surface 731 and (now in FIG. 7C) by internal reflecting surface 732 along optical path 750 to exit interplanar beam director base surface 734 aligned with axis 715(1) of element 710(1).

Next, after passing along axis 715(1) of element 710(1) the beam enters again through base surface 729 into second intraplanar beam director 725. The beam is redirected by internal reflecting surface 726 and then by internal reflecting surface 727 along optical path 750 to exit second intraplanar beam director base surface 729 aligned with axis 715(4) of element 710(4).

Next, after passing along axis 715(4) of element 710(4) the beam enters again through base surface 724 into first intraplanar beam director 720. The beam is redirected by internal reflecting surface 721 and then by internal reflecting surface 722 along optical path 750 to exit first intraplanar beam director base surface 724 aligned with axis 715(3) of element 710(3).

Next, after passing along axis 715(3) of element 710(3) the beam enters again through base surface 729 into second intraplanar beam director 725. The beam is redirected by internal reflecting surface 727 and then by internal reflecting surface 726 to exit second intraplanar beam director base surface 729 aligned with axis 715(2) of element 710(2).

Next, after passing along axis 715(2) of element 710(2) the beam enters again through base surface 724 into first intraplanar beam director 720. The beam is redirected by internal reflecting surface 722 and then by internal reflecting surface 721 to exit first intraplanar beam director base surface 724 aligned with axis 715(5) of element 710(5).

Finally, the beam travels along axis 715(5) through element 710(5) and follows optical path 750 to output coupler 740, which passes a first portion of the beam as laser output beam 755 and reflects a second portion of the beam back along optical path 750.

While the above description discloses the invention in an embodiment as a folded beam laser having ten laser medium elements, arranged in two rows of five elements, and including exactly three beam directors, those skilled in the art should understand that the inventive principle of the disclosed embodiment may be extended to a laser system having two rows of a greater or lesser number of elements.

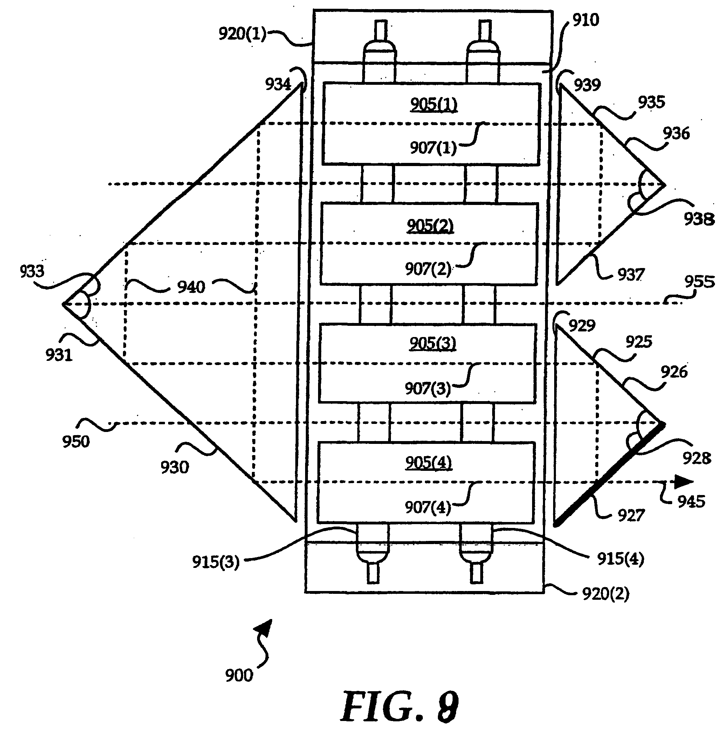

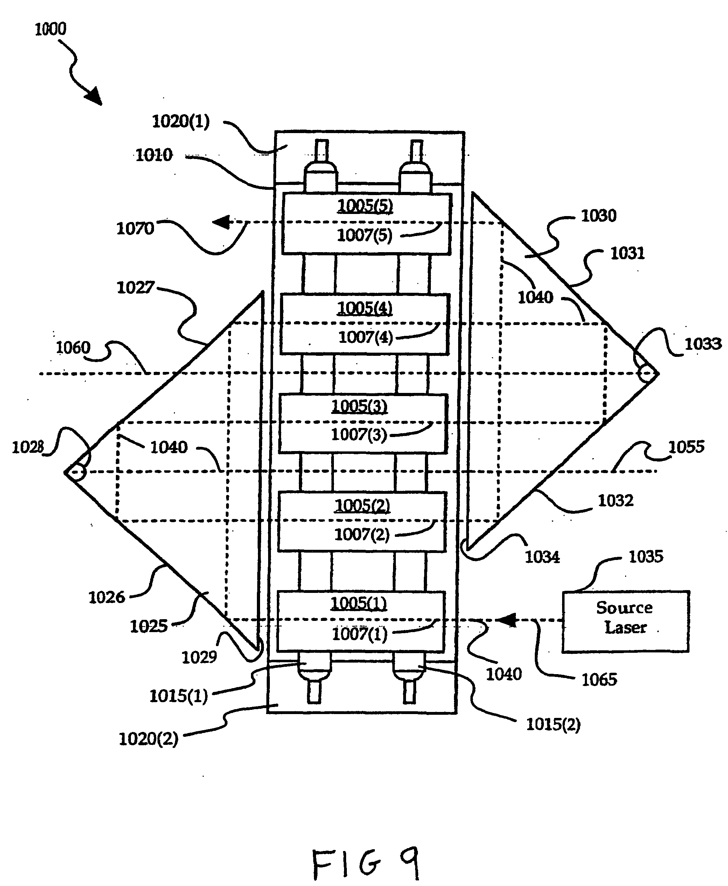

FIG.8 shows a horizontal cross-section of an alternate embodiment, ring laser 900, of the present invention including laser medium elements 905(1-4), a pump chamber housing 910, arc lamps 915(1-4, of which 1 and 2 are not shown), insulator blocks 920(1-2), an output beam director 925, a first beam director 930, and a second beam director 935. Laser medium elements 905(1-4) are preferably right circular cylindrical rods, each having a respective central axis 907(1-4), and are disposed with their respective central axes 907(1-4) parallel, coplanar and equally spaced. Laser medium elements 905(105) are preferably solid state crystals such as ruby rods.

Pumping light incident from arc lamps 915(1-4) stimulates the four laser media elements 905(1-4) to emit a laser beam which is directed by beam directors 925, 930 and 935 along optical path 940. Output beam director 925 is preferably a right isosceles prism, having two orthogonal internally reflecting surfaces 926 and 927, the vertex of which forms a right angle 928, and a base surface 929. Internally reflecting surface 927 is coated with a material of suitable refractive index to partially frustrate internal reflection of incident laser light, such that surface 927 passes a portion of the incident laser light as laser output beam 945 and reflects the remainder of the incident laser light 90 degrees along optical path 940, thus establishing a ring optical resonator in the cavity defined along optical path 940. Further, while it is possible for the ring laser to lase in either direction along optical path 940, known methods, which are beyond the scope of this invention, may be employed to cause ring laser 900 to lase in only one direction.

First beam director 930 is also preferably a right isosceles prism, having two orthogonal internally reflecting surfaces 931 and 932, the vertex of which forms a right angle 933, and a base surface 934. Second beam director 935 is preferably also a right isosceles prism, having two orthogonal internally reflecting surfaces 936 and 937, the vertex of which forms a right angle 938, and a base surface 939. The pair of reflecting surfaces 926 and 927 in beam director 925, the pair of reflecting surfaces 931 and 932 in beam director 930, and the pair of reflecting surfaces 936 and 937 in beam director 935, having orthogonal dispositions, each redirects incident light beams 180 degrees.

Output beam director 925 is disposed with base surface 929 a spaced distance from one end of laser medium elements 905(3-4) and substantially perpendicular to axes 907(1-4). First beam director 930 is disposed with base surface 934 substantially perpendicular to axes 907(1-4) and a spaced distance from ends of laser medium elements 905(1-4) opposite output beam director 925. Second beam director 935 is disposed with base surface 939 substantially perpendicular to axes 907(1-4) and a spaced distance from ends of laser medium elements 905(1-2) opposite first beam director 930. Further, output beam director 925, first beam director 930, and second beam director 935 are positioned relative to each other such that laser medium element axes 907(3&4) are spaced symetrically about a bisector 950 of the right angle 933 apex of output beam director 925, such that pairs of laser medium element axes 907(1&4) and axes 907(2&3) are spaced symetrically about a bisector 955 of the right angle 933 apex of first beam director 930, and such that laser medium element axes 907(1&2) are spaced symetrically about a bisector 960 of the right angle 938 apex of second beam director 935.

For simplicity optical path 940 is discussed as having a beginning and an end, but in fact optical path 940 is a looped, bi-directional path, along which light emitted from elements 905(1-4) can travel in both directions. Known ring laser methods are employed, however, to cause ring laser 900 to lase in only one direction. Partially internal reflecting surface passes a first portion of an incident beam traveling along axis 907(4) through element 905(4) as laser output beam 945 and reflects a second portion of the beam along optical path 940, in the direction of internal reflecting surface 926. Next, the beam is reflected by internal reflecting surface 926 out through base surface 929 of output beam director 925, and because elements 905(3&4) are disposed symmetrically about bisector 950, the beam is aligned with axis 907(3) of element 905(3).

The beam then passes along axis 907(3) through element 905(3) and enters by base surface 934 into first beam director 930. The optical path 940 is redirected 180 degrees by internal reflecting surface 931 and then by internal reflecting surface 932 such that the beam exists base surface 934 of first beam director 930 aligned with axis 907(2) of element 905(2).

Next, after passing along axis 907(2) of element 905(2) the beam enters through base surface 939 into second beam director 935. The beam is redirected by internal reflecting surface 937 and then by internal reflecting surface 936 along optical path 940 to exit second beam director base surface 939 aligned with axis 907(1) of element 905(1).

Next, after passing along axis 907(1) of element 905(1) the beam enters again through base surface 934 into first beam director 930. The beam is redirected by internal reflecting surface 932 and then by internal reflecting surface 931 along optical path 940 to exit first beam director base surface 934 aligned with axis 907(4) of element 905(4).

Finally, the beam travels along axis 907(4) through element 905(4) and follows optical path 940 to internal reflecting surface 927 of output beam director 925, thus completing the loop of optical path 940.

While the above description discloses the invention in an embodiment as a four-element, folded beam ring laser, those skilled in the art should understand that the inventive principle of the disclose embodiment may be extended to a laser system having a larger number of elements.

FIG. 9 shows a cross-section of an alternate embodiment, laser amplifier 1000, of the present invention including five laser medium elements 1005(1-5), pump chamber housing 1010, arc lamps 1015(1,2) insulator blocks 1020(1,2), a first beam director 1025, and a second beam director 1030. Pumping light incident from arc lamps 1015(1,2) stimulates the five laser medium elements 1005(1-5) to emit light which amplifies a laser beam produced by a source laser 1035 and directed by beam directors 1025 and 1030 along an optical path 1040. Laser medium elements 1005(1-5) are right circular cylindrical rods, each having a respective central axis 1007(1-5), and are disposed with their respective central axes 1007(1-5) parallel, coplanar and equally spaced. Laser medium elements 1005(1-5) are preferably solid state crystals such as ruby rods, but non-solid state laser media elements such as a liquid or gas medium in glass containers are within the scope of the invention.

First beam director 1025 is preferably a right isosceles prism, having two orthogonal internally reflecting surfaces 1026 and 1027, the vertex of which forms a right angle 1028, and a base surface 1029. Second beam director 1030 is preferably also a right isosceles prism, having two orthogonal internally reflecting surfaces 1031 and 1032, the vertex of which forms a right angle 1033, and a base surface 1034. The pair of reflecting surfaces 1026 and 1027 in beam director 1025 and the pair of reflecting surfaces 1031 and 1032 in beam *director* 1030, having orthogonal dispositions, each redirects incident light beams 180 degrees. Alternative means such as a roof mirror or optical fibers may be employed for redirecting a beam, but prisms are preferred because an incident beam incurs less loss upon penetrating the base surface and being internally reflected in a prism than upon being reflected by two mirror surfaces.

First beam director 1025 is disposed with base surface 1029 adjacent to pump chamber housing 1010 and substantially perpendicular to axes 1007(1-5). Second beam director 1030 is disposed with base surface 1034 substantially perpendicular to axes 1007(1-5) and adjacent to pump chamber housing 1010 opposite first beam director 1025. Further, first beam director 1025 and second beam director 1030 are positioned relative to each other such that pairs of laser medium element axes 1005(1&4) and 1005(2&3) are spaced symetrically about a bisector 1055 of the right angle 1028 apex of first beam director 1025, and such that pairs of laser medium element axes 1007(2&5) and 1007(3&4) are spaced symetrically about a bisector 1060 of the right angle 1033 apex of second beam director 1030.

A laser beam 1065 emitted by source laser 1035 enters amplifier 1000, passes along axis 1007(1) through element 1005(1) and enters by base surface 1034 into first beam director 1025. The beam is next reflected by internal reflecting surface 1026 and then by internal reflecting surface 1027 such that optical path 1040 is redirected 180 degrees as the beam exits base surface 1029 of first beam director 1025 aligned with axis 1007(4) of element 1005(4).

The beam then passes along axis 1007(4) through element 1005(4) and enters by base surface 1034 into second beam director 1030. The optical path 1040 is redirected 180 degrees by internal reflecting surface 1031 and then by internal reflecting surface 1032 such that the beam exits base surface 1034 of second beam director 1030 aligned with axis 1007(3) of element 1005(3).

Next, after passing along axis 1007(3) of element 1005(3) the beam enters again through base surface 1029 into first beam director 1025. The beam is redirected by internal reflecting surface 1027 and then by internal reflecting surface 1026 along optical path 1040 to exit first beam director base surface 1029 aligned with axis 1007(2) of element 1005(2).

Next, after passing along axis 1007(2) of element 1005(2) the beam enters again through base surface 1029 into second beam director 1030. The beam is redirected by internal reflecting surface 1032 and then by internal reflecting surface 1031 along optical path 1040 to exist second beam director base surface 1034 aligned with axis 1007(5) of element 1005(5).

Finally, the beam travels along axis 1007(5) through element 1005(5) and exits amplifier 1000 as amplified laser beam 1070.

While the above description discloses the invention in an embodiment as a five-element, folded beam laser amplifier, those skilled in the art should understand that the inventive principle of the disclosed embodiment may be extended to a laser system having a greater or lesser number of elements. For example, the lasers 200, 600 and 700 of FIGS. 2, 4 and 7 respectively, could be used as amplifiers by omitting the high reflectors and the output couplers (i.e., 735 and 740 of FIG. 7) and directing the beam of a source laser along the axis of the element (i.e. 710(10) of FIG. 7) that was disposed adjacent to the removed high reflector 735.

Thus, several embodiments of the present invention have been disclosed.

## Claims

1. A laser pumping chamber comprising:
a plurality of laser medium elements (505), the longitudinal axes of the plurality of laser medium elements being in mutually parallel relation; and
pumping means (240) for causing the plurality of laser medium elements to emit a beam, the pumping means comprising a plurality of pumping elements each having a longitudinal axis oriented perpendicular to the longitudinal axes of the plurality of laser medium elements, and each being configured to simultaneously excite at least two of the plurality of laser medium elements, **characterised in that** at least one of the plurality of pumping elements simultaneously pumps all of the plurality of laser medium elements.

2. The laser pumping chamber of Claim 1, wherein the longitudinal axes of the plurality of laser medium elements are substantially coplanar.

3. The laser pumping chamber of Claim 2, wherein the plurality of laser medium elements have a substantially equal transverse spacing.

4. The laser pumping chamber of Claim 1, wherein each pumping element comprises an optical pumping element.

5. The laser pumping chamber of Claim 4, wherein the optical pumping elements comprise arc lamps.

6. The laser pumping chamber of any of Claims 1 to 5, wherein the laser medium elements comprise solid-state laser medium elements.

7. The laser pumping chamber of any of Claims 1 to 6, wherein the plurality of laser medium elements comprises a plurality of laser medium element groups,
the laser medium elements within each group being substantially coplanar thereby defining a corresponding plurality of planes.

8. The laser pumping chamber of Claim 7, wherein the plurality of planes are substantially mutually parallel

9. The laser pumping chamber of Claim 7 or Claim 8, wherein the laser medium elements within each of the plurality of laser medium element groups have an equal transverse spacing.

10. The laser pumping chamber of any of Claims 7 to 9, wherein the plurality of laser medium elements are disposed in a rectilinear array of intraplanar rows and interplanar columns.

11. The laser pumping chamber of any of Claims 1 to 10, whereby differences between the excitation of separate ones of said plurality of laser medium elements are minimised.

12. The laser pumping chamber of any of Claims 1 to 10, wherein the pumping elements pump each of the plurality of laser medium elements by a substantially equal amount.

13. The laser pumping chamber of any of the preceding claims, wherein at least three laser medium elements are provided.

14. The laser pumping chamber as claimed in any of Claims 1 to 13, including an optically transparent solid (300) having a plurality of mutually parallel laser medium element bores (310) and a plurality of pumping element bores (305) oriented perpendicular to the plurality of laser medium element bores; the plurality of laser medium elements being housed in the plurality of laser medium element bores; and the pumping elements being housed in the pumping element bores.

15. A laser pumping chamber comprising:
an optically transparent solid (300) including a plurality of mutually parallel laser element bores (310) and at least one pumping element bore (305) oriented perpendicularly to the plurality of laser medium element bores;
a plurality of laser medium elements (505) being housed in the plurality of laser medium element bores; and
at least one pumping element (240) being housed in the at least one pumping element bore, the at least one pumping element being arranged for simultaneously pumping all of the plurality of laser medium elements.

16. The laser pumping chamber of Claim 15, wherein the plurality of laser medium element bores are substantially coplanar.

17. The laser pumping chamber of Claims 15 or 16, wherein the plurality of laser medium element bores are of substantially equal spacing.

18. A laser, ring laser or laser amplifier including a pumping chamber as claimed in any of Claims 1 to 17.

19. A method for simultaneous pumping of plural laser elements, the method comprising:
providing a plurality of laser medium elements disposed with their respective central longitudinal axes in mutually parallel and coplanar relation;
providing at least one pumping element having a central longitudinal axis oriented perpendicular with respect to the central longitudinal axes of the plurality of laser medium elements; and **characterised by**
supplying a predetermined electrical signal to the at least one pumping element to cause the at least one pumping element to simultaneously pump all of the plurality of laser medium elements;
whereby differences between the excitation of separate ones of said plurality of laser medium elements are minimized.

## Patentansprüche

1. Laserpumpkammer bestehend aus:
einer Vielheit von Lasermediumelementen (505), wobei sich die Achsen der Vielheit von Lasermediumelementen in gegenseitig paralleler Beziehung befinden; und
Pumpmittel (240), die bewirken, dass die Vielheit von Lasermediumelementen einen Strahl emittieren, die Pumpmittel eine Vielheit von Pumpelementen umfassen,
wobei jedes eine Längsachse senkrecht zu den Längsachsen der Vielheit der Lasermediumelemente orientiert hat, und jedes so konfiguriert ist, dass es wenigstens zwei der Vielheit von Lasermediumelementen gleichzeitig erregt, **dadurch gekennzeichnet, dass** wenigstens eins der Vielheit von Pumpelementen gleichzeitig alle der Vielheit von Lasermediumelementen pumpt.

2. Laserpumpkammer des Anspruchs 1, wobei die Längsachsen der Vielheit von Lasermediumelementen im wesentlichen koplanar sind.

3. Laserpumpkammer des Anspruchs 2, wobei die Längsachsen der Vielheit von Lasermediumelementen im wesentlichen einen äquidistanten Querabstand aufweisen.

4. Laserpumpkammer des Anspruchs 1, wobei jedes Pumpelement ein optisches Pumpelement umfasst.

5. Laserpumpkammer des Anspruchs 4, wobei das optische Pumpelement Bogenlampen umfasst.

6. Laserpumpkammer eines beliebigen der Ansprüche 1 bis 5, wobei die Lasermediumelemente Festkörper-Lasermediumelemente umfassen.

7. Laserpumpkammer eines beliebigen der Ansprüche 1 bis 6, wobei die Vielheit von Lasermediumelementen eine Vielheit von Lasermediumelementgruppen umfasst,
wobei die Lasermediumelemente innerhalb jeder Gruppe im wesentlichen koplanar sind und dadurch eine entsprechende Vielheit von Ebenen definieren.

8. Laserpumpkammer des Anspruchs 7, wobei die Vielheit von Ebenen im wesentlichen parallel zueinander sind.

9. Laserpumpkammer des Anspruchs 7 oder des Anspruchs 8, wobei die Lasermediumelemente in jeder der Vielheit von Lasermediumelementgruppen einen äquidistanten Querabstand aufweisen.

10. Laserpumpkammer eines beliebigen der Ansprüche 7 bis 9, wobei die Vielheit von Lasermediumelementen in einer geradlinigen Anordnung von intraplanaren Reihen und interplanarer Spalten angeordnet sind.

11. Laserpumpkammer eines beliebigen der Ansprüche 1 bis 10, wobei Unterschiede zwischen der Erregung separater der besagten Vielheit von Lasermediumelementen minimiert sind.

12. Laserpumpkammer eines beliebigen der Ansprüche 1 bis 10, wobei die Pumpelemente jedes der Vielheit von Lasermediumelementen um einen im wesentlichen gleichen Betrag pumpen.

13. Laserpumpkammer eines beliebigen der vorhergehenden Ansprüche, wobei wenigstens drei Lasermediumelemente vorgesehen sind.

14. Laserpumpkammer wie in einem beliebigen Ansprüche 1 bis 13 beansprucht, einschließlich eines optisch transparenten Festkörpers (300) mit einer Vielheit von zueinander parallelen Lasermediumelementbohrungen (310) und einer Vielheit von Pumpelementbohrungen (305), die senkrecht zur Vielheit von Lasermediumelementbohrungen orientiert sind; wobei die Vielheit von Lasermediumelementen in der Vielheit von Lasermediumelementbohrungen untergebracht ist; und die Pumpelemente in den Pumpelementbohrungen untergebracht sind.

15. Laserpumpkammer bestehend aus:
einem optisch transparenten Festkörper (300) einschließlich einer Vielheit zueinander paralleler Laserelementbohrungen (310) und wenigstens einer Pumpelementbohrung (305), die senkrecht zur Vielheit von Lasermediumelementbohrungen orientiert sind;
einer Vielheit von Lasermediumelementen (505), die in der Vielheit von Lasermediumelementbohrungen untergebracht sind; und wenigstens einem Pumpelement (240), das in der wenigstens einen Pumpelementbohrung untergebracht ist, wobei das wenigstens eine Pumpelement zum gleichzeitigen Pumpen aller der Vielheit von Lasermediumelementen angeordnet ist.

16. Laserpumpkammer des Anspruchs 15, wobei die Vielheit von Lasermediumelementbohrungen im wesentlichen koplanar sind.

17. Laserpumpkammer der Ansprüche 15 oder 16, wobei die Vielheit der Lasermediumelementbohrungen im wesentlichen äquidistanten Abstands sind.

18. Laser, Ringlaser oder Laserverstärker einschließlich einer Pumpkammer wie in einem der Ansprüche 1 bis 17 beansprucht.

19. Verfahren zum gleichzeitigen Pumpen pluraler Laserelemente, wobei das Verfahren umfasst:
Bereitstellung einer Vielheit von Lasermediumelementen, die mit ihren betreffenden zentralen Längsachsen in zueinander paralleler und koplanarer Beziehung angeordnet sind;
Bereitstellung von wenigstens einem Pumpelement, das eine zentrale Längsachse in Bezug auf die zentralen Längsachsen der Vielheit von Lasermediumelementen senkrecht orientiert hat; und **gekennzeichnet durch**
Liefern eines vorbestimmten elektrischen Signals an wenigstens ein Pumpelement, um zu bewirken, dass das wenigstens eine Pumpelement alle der Vielheit von Lasermediumelementen gleichzeitig pumpt;
wodurch Unterschiede zwischen der Erregung separater der besagten Vielheit von Lasermediumelementen minimiert werden.

## Revendications

1. Une chambre de pompage de lasers comprenant:
un nombre d'éléments de milieu de laser (505), les axes longitudinaux du nombre d'éléments de milieu de laser étant parallèles les uns aux autres; et
un moyen de pompage (240) pour permettre au nombre d'éléments de milieu de laser d'émettre un faisceau, le moyen de pompage comprenant un nombre d'éléments de pompage ayant chacun un axe longitudinal orienté perpendiculairement aux axes longitudinaux du nombre d'éléments du milieu de laser et chacun étant configuré de façon à exciter simultanément au moins deux du nombre d'éléments de laser, **caractérisé en ce qu**'au moins un du nombre d'éléments pompants pompe simultanément tout le nombre d'éléments du milieu de laser.

2. La chambre de pompage de lasers de la revendication 1, dans laquelle les axes longitudinaux du nombre d'éléments de milieu de laser sont substantiellement coplanaires.

3. La chambre de pompage de la revendication 2, dans laquelle le nombre de milieux de laser ont des espacements transversaux substantiellement égaux.

4. La chambre de pompage de lasers de la revendication 1 dans laquelle chaque élément de pompage comprend un élément optique de pompage.

5. La chambre de pompage de la revendication 4, dans laquelle les éléments optiques de pompage comprennent des lampes à arc.

6. La chambre de pompage de lasers d'une quelconque des revendications 1 à 5, dans laquelle les éléments de milieu de laser comprennent des éléments de milieu de laser à circuits intégrés.

7. La chambre de pompage de lasers selon l'une quelconque des revendications 1 à 6, dans laquelle le nombre d'éléments de milieu de laser comprennent un nombre de groupes d'éléments de milieu de laser, les éléments de milieu de laser dans chaque groupe étant substantiellement coplanaires, définissant par ce fait un nombre correspondant de plans.

8. La chambre de pompage de lasers de la revendication 7, dans laquelle les plans sont substantiellement parallèles.

9. La chambre de pompage de lasers de la revendication 7 ou 8, dans laquelle les éléments de milieu de laser à l'intérieur de chacun des nombres de groupes d'éléments de milieu de laser ont un espacement transversal égal.

10. La chambre de pompage de lasers de l'une quelconque des revendications 7 à 9, dans laquelle le nombre d'éléments de milieu de lasers sont disposés en un arrangement rectiligne de rangées intraplanaires et de colonnes interplanaires.

11. La chambre de pompage de lasers selon l'une quelconque des revendications 1 à 10, dans laquelle les différences entre l'excitation d'éléments séparés parmi le nombre d'éléments de milieu de laser sont minimisés.

12. La chambre de pompage de lasers de l'une quelconque des revendications 1 à 10, dans laquelle les éléments de pompage pompent chacun élément du nombre des éléments de milieu de laser en une quantité substantiellement égale.

13. La chambre de pompage de lasers selon l'une quelconque des revendications précédentes, dans laquelle au moins trois éléments de milieu de laser sont prévus.

14. La chambre de pompage de laser selon l'une quelconque des revendications 1 à 13, comprenant un corps solide optiquement transparent (300) ayant un nombre d'alésages (310) d'éléments de milieu de laser parallèles les uns aux autres et un nombre d'alésages d'éléments de pompage (305) orientés perpendiculairement au nombre d'alésages d'éléments de milieu de laser; le nombre des éléments de milieu de laser étant logés dans le nombre d'alésages des éléments et les éléments de pompage étant logés dans les alésages des éléments de pompage.

15. Une chambre de pompage de lasers comprenant:
un corps solide (300) optiquement transparent comprenant un nombre d'alésages (310) d'éléments de laser parallèles les uns aux autres et au moins un alésage (305) d'un élément de pompage orienté perpendiculairement au nombre d'alésages d'éléments de milieu de laser,
un nombre d'éléments (505) de milieu de laser logés dans les alésages des éléments; et
au moins un élément de pompage (240) logé dans au moins un alésage d'élément de pompage, cet élément de pompage étant disposé de façon à pomper simultanément tous les éléments du milieu de laser.

16. La chambre de pompage de lasers selon la revendication 15, dans laquelle le nombre d'alésages d'éléments de milieu de laser sont substantiellement coplanaires.

17. La chambre de pompage de lasers de la revendication 15 ou 16, dans laquelle le nombre d'alésages d'éléments de milieu de laser sont espacés substantiellement de façon égale.

18. Un laser, laser en anneau ou amplificateur de laser comprenant une chambre de pompage selon l'une quelconque des revendications 1 à 17.

19. Une méthode pour le pompage simultané d'un nombre d'éléments de laser, la méthode comprenant
le fait de prévoir un nombre d'éléments de milieu de laser disposés avec leurs axes centraux longitudinaux respectifs en une relation mutuellement parallèle et coplanaire;
de prévoir au moins un élément de pompage ayant un axe central longitudinal orienté perpendiculairement par rapport aux axes centraux longitudinaux du nombre des éléments du milieu du laser; et **caractérisé par**
le fait de prévoir un signal électrique prédéterminé vers au moins un élément de pompage pour permettre à au moins un élément de pompage de pomper simultanément tous les éléments du milieu de laser;
par quoi des différences entre l'excitation des éléments séparés du nombre des éléments de milieu de laser est réduite au minimum.
